# EUROPÄISCHE PATENTSCHRIFT

(11) **EP 0 648 000 B1**
(45) Veröffentlichungstag und Bekanntmachung des Hinweises auf die Patenterteilung: **16.04.1997**
(21) Anmeldenummer: 94111129.6
(22) Anmeldetag: 18.07.1994
(51) Int. Cl.: H02G 3/18

(54) **Unterflurgerätedose für nass zu reinigende Böden**
Underfloor apparatus box for wetwashed ground
Boîtier pour appareillage installé sous plancher adapté pour sol nettoyé de façon humide

(30) Priorität: 12.10.1993 DE 9315394 U
(43) Veröffentlichungstag der Anmeldung: 12.04.1995
(73) Patentinhaber: Albert Ackermann GmbH & Co. KG, 51643 Gummersbach (DE)
(72) Erfinder: Knier, Günther G., D-51647 Gummersbach (DE)
(74) Vertreter: Wilhelm & Dauster Patentanwälte European Patent Attorneys

(56) Entgegenhaltungen:
- FR-A- 2 132 272
- US-A- 2 811 575

## Beschreibung

Die Erfindung betrifft eine Unterflurgerätedose für naß zu reinigende Böden mit einem als Schnurauslaß ausgebildeten Bauteil, das zentral in einem Deckel eines Schutzrahmens vorgesehen und in der Betriebsposition von einer Oberseite des Deckels abragend dicht in den Deckel eingebunden ist, wobei zwischen dem Deckel und dem Schutzrahmen eine umlaufende Dichtung vorgesehen ist.

Aus dem DE-GM 7 909 964 ist eine Unterflurgerätedose für naß zu reinigende Böden, insbesondere Steinböden, bekannt. Die Unterflurgerätedose weist einen Schutzrahmen auf, in dem als Deckel eine Montageplatte und eine Steinplatte eingebettet sind. Die Montageplatte ist von einem umlaufenden Dichtprofil eingefaßt und wird für die Montage der Unterflurgerätedose auf den Schutzrahmen aufgesetzt und mit diesem verschraubt. Anschließend wird die Steinplatte auf die Montageplatte aufgelegt. In der Montageplatte und der Steinplatte ist jeweils ein Durchbruch vorgesehen, in den ein Schnurauslaßbauteil eingeschraubt ist, das von der Steinplatte nach oben abragt. Durch das Schnurauslaßbauteil ragen im Betriebszustand die Leitungen der Unterflurgerätedose nach oben heraus. Wird der Schnurauslaß nicht benötigt, d.h. wird die Unterflurgerätedose nicht genutzt, so wird anstelle des Schnurauslaßbauteiles eine Blindabdeckung in den Durchbruch dicht eingeschraubt.

Aufgabe der Erfindung ist es, eine Unterflurgerätedose für naß zu reinigende Böden der eingangs genannten Art zu schaffen, die in einfacher Weise geöffnet und dicht verschlossen werden kann.

Diese Aufgabe wird dadurch gelöst, daß der Deckel schwenkbar am Schutzrahmen angeordnet ist und eine Verriegelungseinrichtung aufweist, die den Deckel in der verriegelten Position gegen die umlaufende Dichtung gepresst hält. Die schwenkbare Anordnung gewährleistet eine einfache Zugänglichkeit der Unterflurgerätedose. Die Verriegelungseinrichtung sichert eine gleichmäßige und zuverlässige Dichtwirkung in der verriegelten Position. Beim Stand der Technik wurde die ausreichende Dichtwirkung gegen das Eindringen von Wasser durch umständliches Verschrauben und durch das Eigengewicht der Steinplatte erzielt. Durch die schwenkbare Anordnung des Deckels und das Vorsehen der Verriegelungseinrichtung wird der Deckel beim Schließen und Verriegeln gegen den Schutzrahmen gepreßt, wodurch die umlaufende Dichtung zusammengepreßt wird. Dadurch entsteht die gleichmäßige und sichere Dichtwirkung.

In weiterer Ausgestaltung der Erfindung weist die Verriegelungseinrichtung ein dem Deckel zugeordnetes Betätigungselement zum Entriegeln eines selbstrückstellenden Verriegelungsmechanismus auf. Dieses Betätigungselement dient einerseits zum Entriegeln des Deckels und andererseits als Handgriff zum Öffnen des Deckels.

In weiterer Ausgestaltung der Erfindung weist die Verriegelungseinrichtung einen am Deckel beweglich gelagerten Rastgriff auf, der mit einem schutzrahmenfesten Gegenstück verriegelbar ist. Dies stellt eine einfache und funktionssichere Verriegelungseinrichtung dar.

In weiterer Ausgestaltung der Erfindung weist der Rastgriff eine Rückstellfeder auf. Mittels dieser Rückstellfeder wird der Rastgriff automatisch in seine Ausgangsposition zurückgezogen, so daß er bei einem Schließen des Deckels wieder ins schutzrahmenfeste Gegenstück einrastet.

In weiterer Ausgestaltung der Erfindung ist das als Schnurauslaß ausgebildete Bauteil innerhalb des Deckels zwischen einer versenkten, bündig mit der Deckeloberseite abschließenden Ruheposition und der Betriebsposition beweglich und es sind Dichtelemente zwischen Deckel und Bauteil sowohl für die Ruhe- als auch für die Betriebsposition vorgesehen, und es sind Mittel zum Sichern des Bauteiles in der Ruhe- und in der Betriebsposition vorgesehen. Dadurch wird unabhängig davon, ob die Unterflurgerätedose genutzt wird oder nicht, im Deckel lediglich ein einziges Bauteil benötigt, das in der Betriebsposition der Unterflurgerätedose als Schnurauslaß und in der nicht genutzten Ruheposition als Blindabdeckung dient. Die Dichtelemente gewährleisten den notwendigen Wasserschutz, da die Unterflurgerätedose bei naß zu reinigenden Böden, wie Steinböden, Keramikböden oder ähnlichen Hartbelagböden eingesetzt wird. Die Mittel zum Sichern des Bauteiles gewährleisten einerseits den korrekten Sitz der Dichtelemente zwischen Deckel und Bauteil und andererseits definierte, fixe Endpositionen, die die jeweils geforderte Funktion zuverlässig erfüllen.

In weiterer Ausgestaltung weist die wenigstens eine Kulissenführung einen in Umfangsrichtung verlaufenden ersten Konternutabschnitt, einen daran anschließenden, auf die Längsachse des Hohlkörpers bezogenen axialen Verschiebenutabschnitt und einen daran anschließenden zweiten, zum ersten Konternutabschnitt parallelen Konternutabschnitt auf. Der Hohlkörper wird daher relativ zum Deckel mittels einer Linearverschiebung zwischen der Ruhe- und der Betriebsposition verschoben. Die Sicherung des Hohlkörpers am Deckel in diesen beiden Endpositionen erfolgt jedoch durch eine Verdrehung in Umfangsrichtung in dem jeweiligen Konternutabschnitt.

In weiterer Ausgestaltung der Erfindung ist der Hohlkörper im Bereich der beiden Konternutabschnitte bajonettverschlußartig arretierbar. Eine Arretierung erfolgt daher sowohl kraftschlüssig als auch durch den Eingriff des wenigstens einen Führungsnockens formschlüssig. Zusätzliche Elemente zur Sicherung sind nicht notwendig, so daß sich ein einfacher Aufbau und eine sichere Funktion ergibt.

In weiterer Ausgestaltung der Erfindung ist ein Teil des Hohlkörpers als Schwenkdeckel ausgebildet, der mittels einer Rastverbindung am anderen Teil des Hohlkörpers arretierbar ist. Dadurch durch ist der Hohlkörper in einfacher Weise aufklappbar, sich eine relativ große Öffnung zu den Installationsgeräten der Unterflurgerätedose ergibt. Dadurch können die elektrischen Leitungen samt Steckern durch diese Öffnungen hindurchgesteckt werden.

In weiterer Ausgestaltung der Erfindung ist der Schwenkdeckel mit einer Schnurauslaßöffnung versehen. Durch diese Schnurauslaßöffnung ragen die elektrischen Leitungen aus der Unterflurgeratedose nach oben heraus.

In weiterer Ausgestaltung der Erfindung ist im Bereich der Schnurauslaßöffnung eine Spritzschutzkante vorgesehen. Diese verhindert das Eindringen von Spritzwasser in die Unterflurgeratedose, wenn der Boden beispielsweise naß gereinigt wird.

In weiterer Ausgestaltung der Erfindung ist die Schnurauslaßöffnung mittels einer Staubschutzdichtung abdichtbar. Dadurch wird eine Verschmutzung im Inneren der Unterflurgerätedose verhindert.

In weiterer Ausgestaltung der Erfindung sind zwischen Deckel und Schutzrahmen mehrere Auflagenoppen aus einem Kunststoffmaterial vorgesehen. Dies ist insbesondere von Vorteil, wenn Deckel und Schutzrahmen aus Metall bestehen. Durch die Auflagenoppen wird das metallische Klappern verhindert. Die Auflagenoppen können außerdem gewisse Toleranzen bezüglich der Einpassung des Deckels in den Schutzrahmen ausgleichen.

Weitere Vorteile und Merkmale der Erfindung ergeben sich aus den Unteransprüchen sowie aus der nachfolgenden Beschreibung von Ausführungsbeispielen der Erfindung, die anhand der Zeichnungen dargestellt sind.
- Fig. 1: zeigt in einem Schnitt einen mit einem schwenkbaren Deckel versehenen Schutzrahmen für eine Ausführungsform einer erfindungsgemäßen Unterflurgerätedose, wobei der Deckel aufgeklappt ist und einen als Tubus ausgebildeten Schnurauslaß aufweist,
- Fig. 2: einen Schnitt ähnlich Fig. 1, bei der jedoch der Deckel in der geschlossenen Position dargestellt ist und der Tubus in einer Ruheposition in dem Deckel versenkt ist, in der seine Oberseite bündig mit der Deckeloberseite abschließt,
- Fig. 3: eine Schnittdarstellung des Deckels nach Fig. 2, bei der der Tubus jedoch in seine nach oben abragende Betriebsposition innerhalbs des Deckels verschoben ist,
- Fig. 4: einen Ausschnitt des Deckels nach Fig. 3 auf Höhe des Tubus, der in einer zwischen der Ruhe- und der Betriebsposition befindlichen Zwischenposition dargestellt ist,
- Fig. 5: in einem Ausschnitt eine Ausführung eines Deckelverschlusses, der mittels eines Griffbügels auslösbar ist,
- Fig. 5a: eine Draufsicht auf die Ausführung nach Fig. 5 in der entriegelten Position,
- Fig. 6: einen Ausschnitt ähnlich Fig. 5, bei der der Griffbügel sich in einer versenkten Position befindet, so daß der Deckelverschluß verriegelt ist,
- Fig. 7: in einem Ausschnitt eine weitere Ausführung eines Deckelverschlusses, bei der die Verriegelung durch einen Betätigungshebel entriegelbar ist,
- Fig. 8: eine Darstellung ähnlich Fig. 7, bei der sich der Deckelverschluß in der verriegelten Position befindet,
- Fig. 9: eine Draufsicht auf den Riegel des Deckelverschlusses nach den Figuren 7 und 8,
- Fig. 10: eine Draufsicht auf den Deckelverschluß nach den Fig. 7 bis 9, wobei die verriegelte Position dargestellt ist,
- Fig. 11: in einem Schnitt eine weitere Ausführungsform eines Tubus ähnlich Fig. 1 bis 4, der mit einem modifizierten Schnurauslaß zwischen Oberteil und Unterteil versehen ist,
- Fig. 12: eine Seitenansicht des Tubus nach Fig. 11, wobei Oberteil und Unterteil in der geschlossenen Position dargestellt sind,
- Fig. 13: die Ausführungsform nach Fig. 12 in einer Schnittdarstellung, wobei die Art der Durchführung eines elektrischen Kabels durch den Schnurauslaß ersichtlich ist und
- Fig. 14: eine Draufsicht auf das Unterteil des Tubus nach den Figuren 11 bis 13.

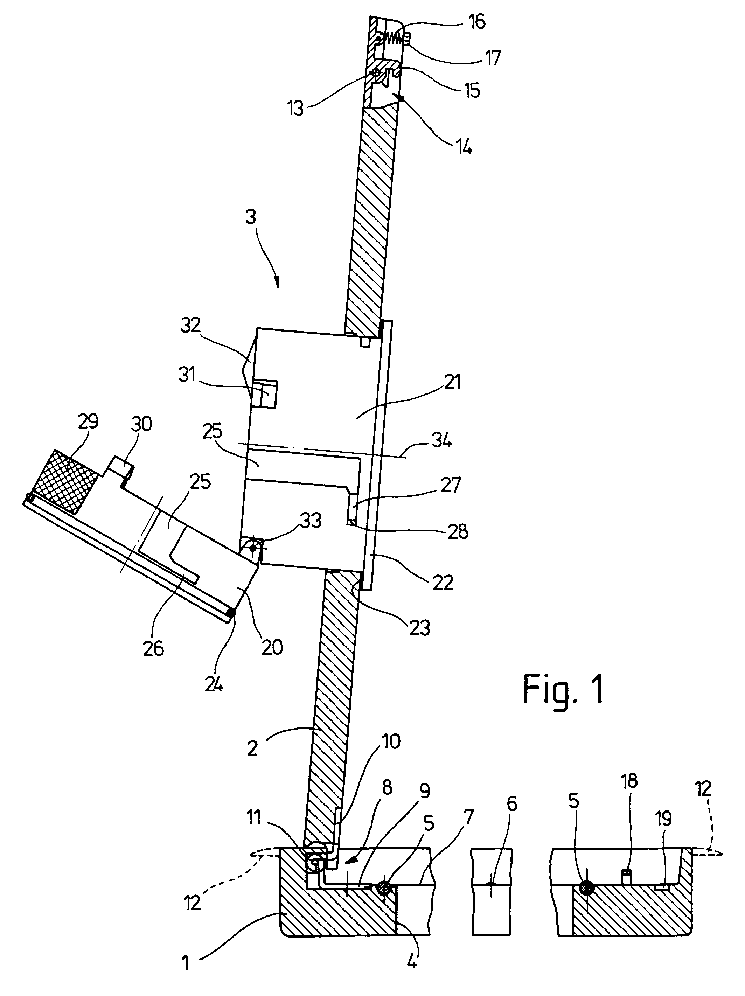

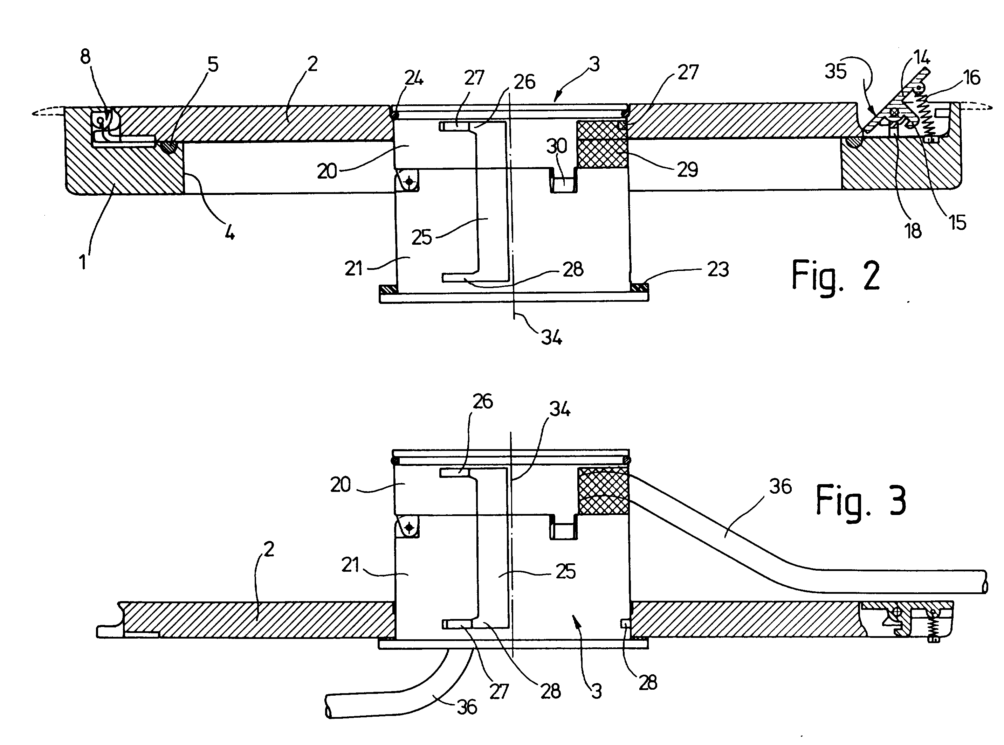

Ein Schutzrahmen (1) nach den Figuren 1 und 2 bildet den Abschluß einer Unterflurgerätedose bezüglich eines Fußbodens, in den die Unterflurgerätedose eingesetzt ist. Durch den Schutzrahmen (1) schließt die Unterflurgerätedose in an sich bekannter Weise im wesentlichen bündig mit dem Fußboden ab, unter dem sie angeordnet ist. Die Unterflurgerätedose mit dem Schutzrahmen (1) ist insbesondere für Fußböden geeignet, auf denen Steinplatten, Keramikplatten oder ähnliche Hartbeläge verlegt sind. Die Montageöffnung der Unterflurgerätedose ist wie auch der Schutzrahmen (1) vorzugsweise rund. In einem entsprechenden mit dem Schutzrahmen (1) verbundenen Einsatz sind in der Unterflurgerätedose mehrere Gerätebecher angeordnet, in denen die entsprechenden Elektroinstallationsgeräte gehalten sind. Die Unterflurgerätedose selbst ist in den Zeichnungen nicht dargestellt, da sie im Aufbau den an sich bekannten Ausführungsformen entspricht.

Die Öffnung (4) zur Innenseite der Unterflurgerätedose im Schutzrahmen (1) ist durch einen Deckel (2) abdeckbar, der um eine in eingebautem Zustand horizontale Schwenkachse (11) am Schutzrahmen (1) schwenkbar gehalten ist. Dazu ist eine Scharnieranordnung (8) vorgesehen, die ein am Schutzrahmen (1) befestigtes stationäres Scharnierteil (9) und ein korrespondierendes, am Deckel (2) befestigtes Scharnierstück (10) aufweist. Im geschlossenen Zustand (Fig. 2) überdeckt der - vorzugsweise ebenfalls runde - Deckel (2) die vorzugsweise kreisrunde Öffnung (4) vollständig und liegt über seinen gesamten Umfang auf einem entsprechenden Auflagerand des Schutzrahmens (1) auf. Die Oberseite des Deckels (2) schließt bündig mit der Oberkante des Schutzrahmens (1) und damit auch mit der Fußbodenoberfläche ab. Der seitliche Rand des Schutzrahmens (1) ist mit einer bündig an die benachbarten Fußbodenplatten anschließenden Anlegekante oder, gemäß der gestrichelten Darstellung, mit einer horizontal abragenden Schutzkante (12) versehen. Dadurch wird ein zwischen dem Rand der Fußbodenöffnung und dem Schutzrahmen (1) verbleibender Spalt überdeckt. Sowohl der Schutzrahmen (1) als auch der Deckel (2) sind vorzugsweise aus Aluminiumdruckguß hergestellt. Um im geschlossenen Zustand des Deckels (2) ein metallisches Klappern zwischen dem Auflagerand des Schutzrahmens (1) und dem Deckel (2) zu vermeiden, sind auf dem Auflagerand über seinen Umfang verteilt mehrere Auflagenoppen (6) aus einem Kunststoffmaterial angebracht. Um die Öffnung (4) herum ist in den Auflagerand des Schutzrahmens (1) eine umlaufende Dichtung (5) mit kreisförmigem Querschnitt eingesetzt. Diese Dichtung (5) dichtet die Öffnung (4) bei geschlossenem Deckel (2) nach oben ab, so daß auf dem Fußboden und auf der Deckeloberfläche befindliches Wasser nicht durch die Öffnung (4) hindurch in die Unterflurgerätedose eindringen kann.

Auf der der Schwenkachse (11) gegenüberliegenden Seite ist eine Verriegelungsvorrichtung (13 bis 19) vorgesehen, mittels derer der Deckel (2) auf die Dichtung (5) preßbar und auf dem Schutzrahmen (1) arretierbar ist. Durch die Verriegelungsvorrichtung wird die Kompression der Dichtung (5) zwischen Deckel (2) und Schutzrahmen (1) erreicht, um die notwendige Dichtwirkung erzielen zu können. Die Verriegelungsvorrichtung weist einen am Deckel (2) um eine zur Schwenkachse (11) parallele Drehachse (13) schwenkbar gelagerten Rasthebel (14) auf, dessen Oberseite mit der Oberseite des Deckels (2) in unbelasteter Position bündig abschließt. Der Rasthebel (14) weist einen - auf die Oberseite bezogen - lotrecht nach unten abragenden Rasthaken (15) auf, dem auf dem Auflagerand des Schutzrahmens (1) eine korrespondierende Raststelle (18) in Form einer Öse zugeordnet ist. Die Öse ist starr mit dem Schutzrahmen (1) verbunden. Am Rasthebel (14) greift eine Rückstellfeder (16) an, die an ihrem anderen Ende an einem Steg (17) des Deckels (2) befestigt ist. In der verrasteten Position des Deckels (2) im Schutzrahmen (1) hintergreift der Rasthaken (15) die als Öse ausgebildete Raststelle (18), wobei die formschlüssige Sicherung zwischen Rasthaken (15) und Raststelle (18) durch die Gegenkraft der elastischen Dichtung (5), die in dieser Position zusammengepreßt ist, gesichert ist. Ein Öffnen der Verriegelungsvorrichtung erfolgt dadurch, daß zum einen der Deckel (2) nach unten gegen den Schutzrahmen (1) gepreßt wird, und zum anderen der Rasthebel (14) in Richtung des Pfeiles (35) (Fig. 2) nach unten gedrückt wird, wodurch der Rasthaken (15) aus der Öse aushakt. Die elastische Rückstellkraft der Dichtung (5) drückt den Deckel (2) automatisch um einen bestimmten Betrag nach oben, so daß auch eine Rückstellung des Rasthebels (14) durch die Rückstellfeder (16) kein Einrasten des Rasthakens (15) mehr bewirken kann. Zum Öffnen des Deckels (2) wird der Rasthebel (14) nun als Betätigungsgriff eingesetzt, wodurch der Deckel (2) durch das Angreifen einer Hand im Bereich des Rasthebels (14) in einfacher Weise hochgehoben und verschwenkt werden kann. Bei einem erneuten Schließen des Deckels (2) gleitet der Rasthaken (15) auf der als Öse ausgebildeten Raststelle (18) entlang, bis sich der Rasthaken (15) seitlich neben der Raststelle (18) befindet. Wird nun der Deckel (2) gegen die Kraft der Dichtung (5) nach unten gedrückt, so rastet der Rasthaken (15) automatisch in der Öse ein. Der Deckel (2) ist nunmehr im Schutzrahmen (1) verriegelt, wobei gleichzeitig eine Kompression der Dichtung (5) erreicht wird.

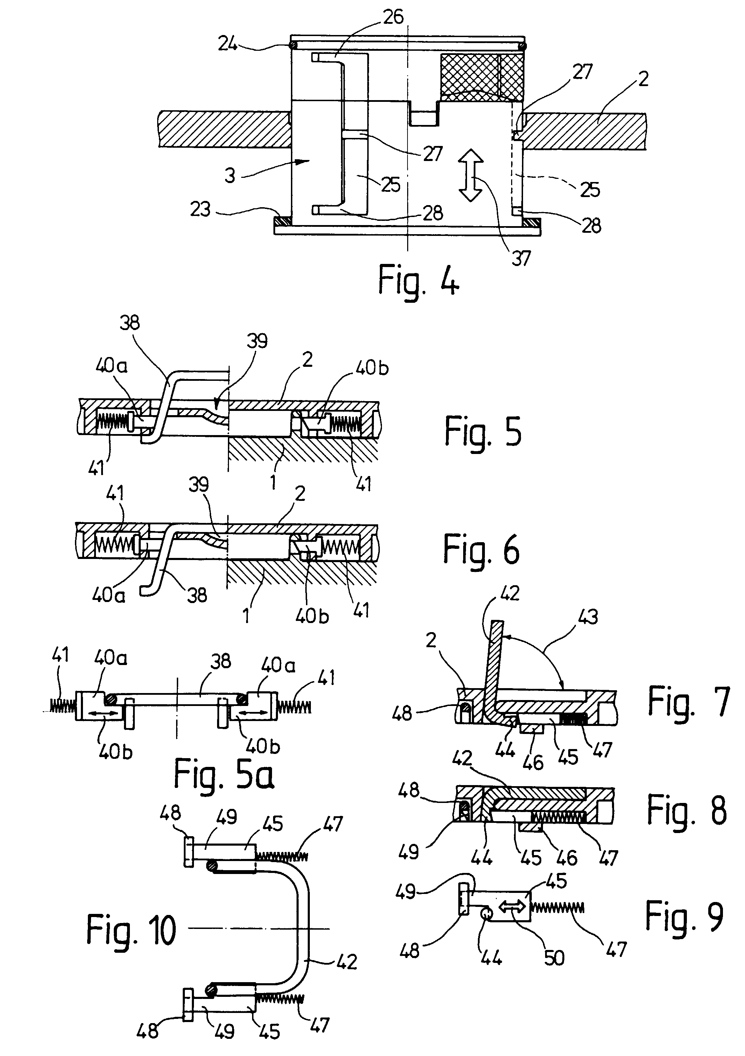

Bei der Verriegelungsvorrichtung nach den Figuren 5, 5a und 6 ist ein Griffbügel (38) im Deckel (2) vorgesehen, der ebenfalls eine Doppelfunktion erfüllt, indem er einerseits als Griff zum Öffnen des Deckels (2) und andererseits als Auslöser zum Entriegeln des Verriegelungsmechanismus dient. Die Verriegelungsvorrichtung nach den Figuren 5, 5a und 6 ist ebenfalls gegenüberliegend zur Schwenkachse (11) des Deckels (2) angeordnet. Sowohl in Fig. 5 als auch in Fig. 6 ist in der linken Hälfte der Darstellung eine andere Schnittebene als in der rechten Hälfte gezeigt. Die in den beiden Zeichnungen jeweils linke Schnittebene liegt - auf eine Draufsicht auf die beiden Zeichnungen bezogen - vor der rechten Schnittebene. Die linke Schnittebene befindet sich daher auf Höhe des Griffbügels, die rechte Schnittebene hinter dem Griffbügel (38). Der Griffbügel (38) ist U-förmig gestaltet und weist zwei nach außen abragende Enden auf, die unter entsprechende Stege des Deckels (2) greifen. Der Griffbügel (38) ist innerhalb zweier nicht näher bezeichneter Langlöcher lotrecht zur Oberfläche des Deckels (2) nach oben und nach unten verschiebbar. In Fig. 5 befindet sich der Griffbügel (38) in seiner oberen, in Fig. 6 in seiner unteren Endposition. In der unteren Endposition schließt die Oberseite des Griffbügels (38) bündig mit der Oberfläche des Deckels (2) ab, da der Griffbügel (38) in dieser Position in einer entsprechenden Griffaussparung (39) eingebettet ist. Als Verriegelungsmechanismus zwischen Deckel (2) und Schutzrahmen (1) dient auf beiden Seiten des Griffbügels (38) je ein Doppelstift (40a, 40b), der einen Verriegelungsstift (40b) und einen Auslösestift (40a) aufweist, die starr miteinander verbunden sind. Der Doppelstift (40a, 40b) ist parallel zur Oberfläche des Deckels (2) in einem entsprechenden Hohlraum verschiebbar und durch jeweils eine Druckfeder (41) in Richtung des Griffbügels (38) beaufschlagt. Der Auslösestift (40a) auf jeder Seite des Griffbügels (38) liegt an jeweils einem Schenkel des Griffbügels (38) an. Der dazu parallele Verriegelungsstift (40b) auf jeder Seite des Griffbügels (38) ist hinter dem Griffbügel (38) vorgesehen und koaxial zu einer Rastöffnung eines am Schutzrahmen (1) angeformten Raststeges, der nicht näher bezeichnet ist. Der Auslösestift (40a) auf jeder Seite des Griffbügels (38) ist an seiner Stirnseite mit einer Schräge versehen, die dem Winkel jedes Schenkels des Griffbügels (38) relativ zur Oberfläche des Deckels (2) entspricht. Da jeder Schenkel des Griffbügels (38) zu seinem Ende hin schräg nach außen gerichtet ist, werden die beiden Auslösestifte (40a) auf beiden Seiten des Griffbügels (38) beim Hochziehen des Griffbügels (38) in die Position nach Fig. 5 nach außen gedrückt. Dadurch werden die beiden auf jeder Seite starr mit ihnen verbundenen Verriegelungsstifte (40b) ebenfalls nach außen gedrückt, wobei sie sich aus der Rastöffnung herausschieben. Der Deckel (2) ist nunmehr entriegelt und kann angehoben werden. Auch bei dieser Ausführung erfolgt eine erneute Verriegelung automatisch, da die Anlaufschrägen der Verriegelungsstifte (40b) beim Schließen des Deckels (2) auf den Stirnkanten der Raststege des Schutzrahmens (1) zur Auflage kommen und beim weiteren Schließen des Deckels (2) zur Seite geschoben werden. Sobald sich die Verriegelungsstifte (40b) auf Höhe der Rastöffnungen befinden, rasten sie aufgrund der Federkraft der Druckfedern (41) automatisch in diese ein.

Das Prinzip der Verriegelungsvorrichtung für den Deckel (2) nach den Figuren 7 bis 10 ist der Verriegelungsvorrichtung nach den Figuren 5, 5a und 6 ähnlich. Dort sind ebenfalls zwei Verriegelungsstifte (45) vorgesehen, die mittels eines Auslösehebels (42) aus einer Raststelle (48) ausrastbar sind. Die riegelungsstifte (45) weisen ähnlich wie der Doppelstift nach den Figuren 5 und 6 zwei zueinander parallele Stufen auf, wobei die eine als in die Raststelle (48) einrastbarer Rastfortsatz (49) ausgebildet ist. Der Auslösehebel (42) wirkt auf ein Stufenteil neben dem Rastfortsatz (49). Die Verriegelungsstifte (45) sind in Richtung des Doppelpfeiles (50) parallel zur Oberseite des Deckels (2) in einer entsprechenden Führung (46) verschiebbar. Auf die Verriegelungsstifte (45) wirkt je eine Druckfeder (47), die sie jeweils in Richtung der Raststelle (48) drückt. In der verriegelten Position des Deckels (2) nach Fig. 8 befindet sich der Rastfortsatz (49) in der Raststelle (48), wodurch der Deckel (2) am Schutzrahmen (1) verriegelt ist. Der Auslösehebel (42) schließt bündig mit der Oberfläche des Deckels (2) ab. Durch eine Bewegung in Richtung des Doppelpfeiles (43) wird der Auslösehebel (42) nach oben verschwenkt, wodurch seine Enden (44) die Verriegelungsstifte (45) entgegen der Federkraft der Druckfeder (47) nach hinten verschieben. Dadurch kommt der Rastfortsatz (49) an der Raststelle (48) außer Eingriff und der Deckel (2) wird frei. Nun kann der Deckel (2) in einfacher Weise angehoben und geöffnet werden. Die Druckkraft der Druckfedern (47) drückt sowohl den Auslösehebel (42) als auch die Verriegelungsstifte (45) wieder in die unbelastete Ausgangsposition zurück. Die Einkerbungen im Bereich der Enden (44) des Auslösehebels (42) sind schräg ausgebildet, so daß sich die entsprechenden Stirnschrägen der Verriegelungsstifte (45) an diese anschmiegen. Die Einkerbungen bilden daher eine Verliersicherung für den Auslösehebel (42).

In der Mitte des Deckels (2) befindet sich ein zentraler Durchbruch, in den ein als Schnurauslaßbauteil dienender Hohlkörper in Form eines Tubus (3) eingesetzt ist. Der Tubus (3) weist eine hohlzylindrische Form auf und ist zum Inneren der Unterflurgerätedose hin offen. An seinem unteren Ende weist der Tubus (3) einen - auf seine Mittellängsachse (34) bezogen - radial nach außen abragenden Rand auf. Auf der Oberseite dieses umlaufenden Randes ist eine umlaufende elastische Dichtung (23) vorgesehen, die in der Position nach Fig. 3 von unten gegen den Deckel (2) gepreßt wird. Der Tubus (3) besteht aus zwei Teilen. Ein Oberteil (20) weist etwa die Hälfte der axialen Höhe eines Unterteiles (21) auf und ist um eine zur Oberfläche des Deckels (2) parallele Schwenkachse (33) schwenkbar am Unterteil (21) angeordnet. Die Scharniere im Bereich der Schwenkachse (33) sind dabei so ausgebildet, daß sich ein Endanschlag für eine maximale Öffnungsposition des Oberteiles (20) ergibt. Diese maximale Öffnungsposition ist in Fig. 1 dargestellt. In der geschlossenen Position des Oberteiles (20) ist es mittels zweier Rastverbindungen mit dem Unterteil (21) verrastbar. Dazu sind an zwei etwa gegenüberliegenden Bereichen des Oberteiles (20) zwei von seiner Unterkante axial abragende Rasthaken (30) vorgesehen, die radial nach innen abragende Rastnasen aufweisen. Diese rasten beim Schließen des Oberteiles (20) in korrespondierende Rastaussparungen (31) im Bereich der Oberkante des Unterteiles (21) ein. Der Tubus (3) ist aus Kunststoff hergestellt, so daß die Rasthaken (30) eine gewisse Elastizität aufweisen, die wahlweise ein Ein- und Ausrasten der Rastverbindung ermöglichen.

Im Bereich der Oberkante des Tubus (3) ist das Oberteil (20) mit einem radial umlaufenden elastischen Dichtring (24) versehen, der in einer entsprechenden Ringnut des Oberteiles (20) eingebettet ist. Der Dichtring (24) steht über die Außenwandung des Tubus (3) radial ab, so daß er in der Position des Tubus (3) nach Fig. 2 gegen den Rand des Durchbruchs im Deckel (2) gepreßt wird. In dieser Endposition dichtet daher der Dichtring (24) den Durchbruch im Deckel (2) nach außen ab. In der Endposition nach Fig. 3 dichtet die auf der Unterseite des Deckels (2) im Bereich des Durchbruchs zur Anlage kommende Dichtung (23) den Durchbruch ab. Die Position nach Fig. 2 stellt dabei eine Ruheposition des Tubus (3) dar, in der die Unterflurgerätedose nicht genutzt wird. In dieser Position wirkt der Tubus (3) als Blindabdeckung gemäß dem Stand der Technik. Die Oberseite des Tubus (3) schließt bündig mit der Oberseite des Deckels (2) ab. Die Endposition nach Fig. 3 stellt die Betriebsposition des Tubus (3) dar, in der den jeweiligen Elektroinstallationsgeräten innerhalb der Unterflurgerätedose elektrische Kabel (36) von auf dem Fußboden befindlichen elektrischen Verbrauchern zugeführt sind. In dieser Betriebsposition ragt der Tubus (3) durch den Durchbruch des Deckels (2) hindurch über die Oberseite des Deckels (2) hinaus axial nach oben ab. Zum Einführen der elektrischen Kabel (36) einschließlich der mit diesen verbundenen Stecker wird das Oberteil (20) geöffnet, die Stecker einschließlich der elektrischen Kabel (36) werden nach innen hindurchgeführt, die Stecker in die in den Gerätebechern gehaltenen Steckdosen gesteckt und anschließend wird das Oberteil (20) auf das Unterteil (21) gedrückt und verrastet. Die elektrischen Kabel (36) ragen durch einen Schnurauslaß in Form einer radialen Öffnung im Oberteil (20) nach außen. Dieser Schnurauslaß ist einerseits mit einer Spritzschutzkante (32) und andererseits mit einer netzartigen Staubschutzdichtung (29) versehen.

Um den Tubus (3) aus der Ruheposition (Fig. 2) in die Betriebsposition (Fig. 3) innerhalb des Durchbruchs axial verschieben zu können, weist die Außenwandung des Tubus (3) über seinen Umfang verteilt drei nutförmige Kulissenführungen auf. In jede dieser Kulissenführungen ragt je ein vom Rand des Durchbruchs radial nach innen abstehender Führungsnocken (27) hinein. Jede Kulissenführung weist einen sich über nahezu die gesamte Höhe des Tubus (3) erstreckenden Verschiebeabschnitt (25) auf, dessen Breite in etwa der Breite des jeweiligen Führungsnocken (27) entspricht (Fig. 4). Am unteren und am oberen Ende des Verschiebeabschnittes (25) weist die Kulissenführung einen sich in Umfangsrichtung des Tubus (3) erstreckenden schmalen Konternutabschnitt (26, 28) auf, wobei sich der erste Konternutabschnitt (26) im Oberteil (20) und der zweite Konternutabschnitt (28) im Unterteil (21) befindet. Bei diesem Ausführungsbeispiel nach den Figuren 1 bis 4 ist auf Höhe der Staubschutzdichtung (29) kein oberer Konternutabschnitt (26) vorgesehen, so daß zwar drei Kulissenführungen, aber nur zwei obere Konternutabschnitte (26) vorgesehen sind. Dise genügen jedoch zur sicheren Arretierung des Tubus (3). Beide Konternutabschnitte (26 und 28) erstrecken sich im gleichen Drehsinn in Umfangsrichtung, bei der Darstellung nach den Figuren 2 bis 4 jeweils nach links. Die Höhe jedes Konternutabschnitts (26, 28) entspricht in etwa der Höhe des Führungsnockens (27), der einen rechteckigen Querschnitt aufweist. Der Führungsnocken (27) ist daher sowohl in den beiden Konternutabschnitten (26 und 28) als auch im Verschiebeabschnitt (25) formschlüssig geführt, so daß sich für die Bewegung des Tubus (3) zwischen der Ruhe- und der Betriebsposition und umgekehrt jeweils eine Zwangsführung ergibt.

Beim Ausführungsbeispiel steigt der Grund der beiden Konternutabschnitte (26 und 28) jeweils zu ihrem Ende hin leicht an, so daß der Führungsnocken (27) bei einer Drehbewegung des Tubus (3) im Bereich der beiden Konternutabschnitte (26 und 28) jeweils zusätzlich eine Verklemmung des Tubus (3) bewirkt.

Bei einer anderen Ausführungsform der Erfindung steigt der Grund der Konternutabschnitte (26 und 28) nicht an, da sich bereits aufgrund der jeweils wirksamen Dichtelemente in Form der Dichtung (23) oder des Dichtrings (24) eine ausreichende Verklemmung des Tubus (3) in der jeweiligen Endposition ergibt.

Zur einfachen Betätigung der Verschiebe- und Drehbewegung des Tubus (3) ist die Oberseite des Tubus (3) mit Angriffsflächen für ein Werkzeug oder für eine manuelle Betätigung versehen. Aus der verklemmten Ruheposition nach Fig. 2 wird der Tubus (3) daher zunächst so weit verdreht, bis die drei Führungsnocken (27) am Umfang des Tubus (3) axial mit den Verschiebeabschnitten (25) fluchten. Anschließend wird der Tubus (3) axial nach oben gezogen oder geschoben, bis sich die Führungsnocken (27) auf radialer Höhe der Konternutabschnitte (28) befinden. Durch ein erneutes Verdrehen des Tubus (3) schieben sich die Konternutabschnitte (28) auf die Führungsnocken (27), wodurch sich der Tubus (3) auf diesen Führungsnocken (27) verklemmt.

Sobald sich der Tubus (3) in der Betriebsposition nach Fig. 3 befindet, kann das den Schwenkdeckel des Tubus (3) bildende Oberteil (20) geöffnet werden und das Anschließen der Unterflurgerätedose fertiggestellt werden. Sowohl in der Ruhe- als auch in der Betriebsposition ist die Unterflurgerätedose jeweils vollständig zum Fußboden hin abgedichtet, so daß auch eine Naßreinigung des Fußbodens keine Beeinträchtigung der Funktion der Unterflurgerätedose hervorrufen kann.

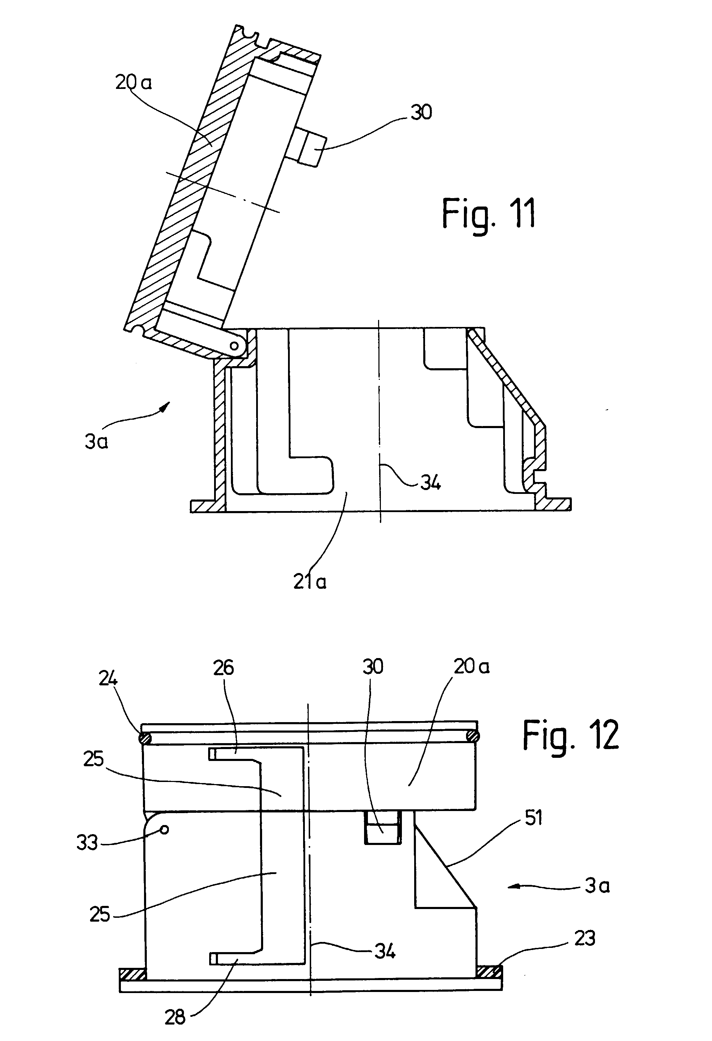

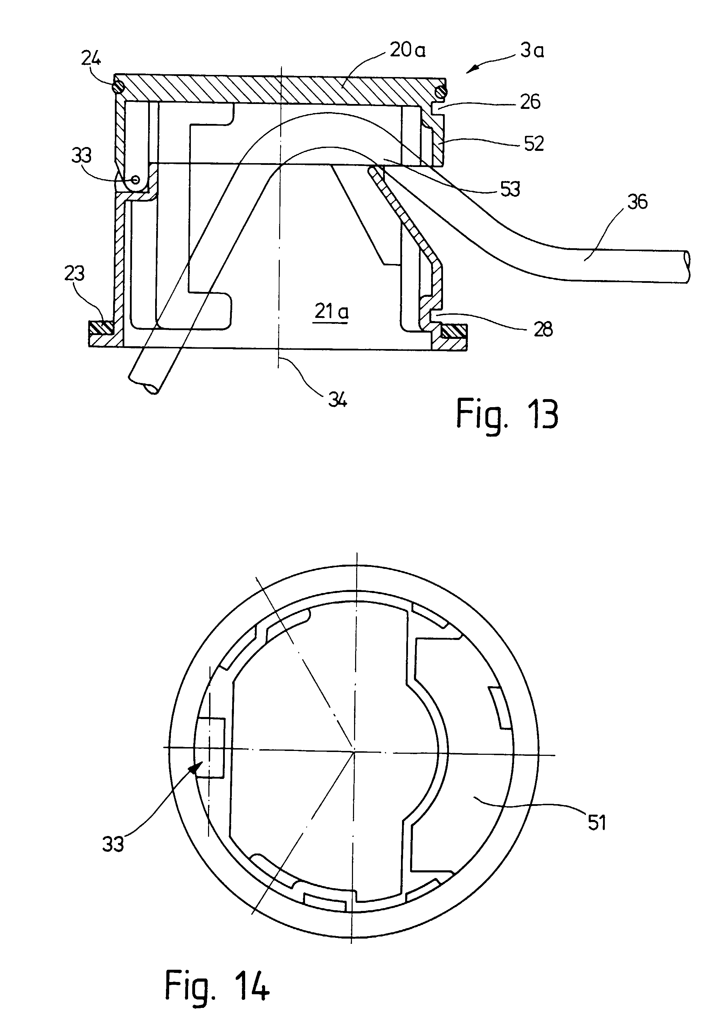

Der Tubus (3a) nach den Figuren 11 bis 14 entspricht im wesentlichen dem Tubus (3) nach den Figuren 1 bis 4. Der Schnurauslaß (51, 52, 53) für die elektrischen Kabel (36) ist jedoch anders gestaltet. Bei dieser Ausführung befindet sich eine Öffnung (53) für den Schnurauslaß am Übergang zwischen dem Oberteil (20a) und dem Unterteil (21a) und zwar - in der Betriebsposition - in einer waagrechten Ebene parallel zur Oberfläche des Deckels (2). Entgegen der Ausführung nach den Figuren 1 bis 4 ist die Öffnung (53) daher nicht seitlich nach außen, sondern zum Unterteil (21a) nach unten gerichtet. Diese Ausbildung wird dadurch erreicht, daß das Oberteil (20a) auch im Bereich des Schnurauslasses mit einem zylindrischen Kragen (52) versehen ist, so daß der zylindrische Kragen (52) um den gesamten ebenen Deckel des Oberteils (20a) umlaufend nach unten abragt. Das Unterteil (21a) hingegen weist im Bereich des Schnurauslasses eine kegelstumpfförmig nach innen gezogenen Wandungsabschnitt (51) auf, deren oberer Rand gegenüber dem unteren Rand des zylindrischen Kragens (52) zur Mittellängsachse (34) hin radial nach innen versetzt ist. Zwischen dem oberen Rand des kegelstumpfförmig nach innen gezogenen Wandungsabschnitts (51) und dem zylindrischen Kragen (52) entsteht daher bei geschlossenem Tubus (3a) - d.h. bei miteinander verrastetem Oberteil (20a) und Unterteil (21a) - die Öffnung (53) für die elektrischen Kabel (36) mit kreisringabschnittförmiger Fläche. Da der zylindrische Kragen (52) auch auf Höhe des Schnurauslasses um das Oberteil (20a) herumgezogen ist, weist die dritte Kulissenführung in diesem Bereich auch einen dritten oberen Konternutabschnitt (26) auf, der die Fixierung des Tubus im Deckel (2) weiter verbessert. Da auf Höhe des Schnurauslasses sowohl das Unterteil (21a) als auch das Oberteil (20a) in derselben Radialebene abschließen, wird verhindert, daß Spritzwasser aus waagrechter Richtung in den Tubus (3a) eindringen kann. Der Tubus (3a) entspricht in seiner übrigen Ausgestaltung dem Tubus (3) nach den Figuren 1 bis 4, so daß diesbezüglich auch die gleichen Bezugszeichen verwendet wurden. Auf eine nähere Erläuterung dieser bereits anhand des Tubus (3) beschriebenen Merkmale wird daher verzichtet.

## Patentansprüche

1. Unterflurgerätedose für naß zu reinigende Böden, mit einem als Schnurauslaß ausgebildeten Bauteil (3), das zentral in einem Deckel (2) eines Schutzrahmens (1) vorgesehen und in der Betriebsposition von einer Oberseite des Deckels abragend dicht in den Deckel eingebunden ist, wobei zwischen dem Deckel und dem Schutzrahmen eine umlaufende Dichtung (5) vorgesehen ist, dadurch gekennzeichnet, daß der Deckel (2) schwenkbar am Schutzrahmen (1) angeordnet ist und eine Verriegelungseinrichtung (13 bis 19; 38 bis 41; 42 bis 50) aufweist, die den Deckel (2) in der verriegelten Position gegen die umlaufende Dichtung (5) gepresst hält.

2. Unterflurgerätedose nach Anspruch 1, dadurch gekennzeichnet, daß die Verriegelungseinrichtung ein dem Deckel (2) zugeordnetes Betätigungselement (14, 38, 42) zum Entriegeln eines selbstrückstellenden Verriegelungsmechanismus aufweist.

3. Unterflurgerätedose nach Anspruch 2, dadurch gekennzeichnet, daß die Verriegelungseinrichtung einen am Deckel (2) beweglich gelagerten Rastgriff (14) aufweist, der mit einem schutzrahmenfesten Gegenstück (18) verriegelbar ist.

4. Unterflurgerätedose nach Anspruch 3, dadurch gekennzeichnet, daß der Rastgriff (14) eine Rückstellfeder (16) aufweist.

5. Unterflurgerätedose nach einem der vorhergehenden Ansprüche, dadurch gekennzeichnet, daß das als Schnurauslaß ausgebildete Bauteil (3) innerhalb des Deckels (2) zwischen einer versenkten, bündig mit der Deckeloberseite abschließenden Ruheposition und der Betriebsposition beweglich ist, daß Dichtelemente (23, 24) zwischen Deckel (2) und Bauteil (3) sowohl für die Ruhe- als auch für die Betriebsposition vorgesehen sind, und daß Mittel (26, 27, 28) zum Sichern des Bauteiles (3) in der Ruhe- und in der Betriebsposition vorgesehen sind.

6. Unterflurgerätedose nach Anspruch 5, dadurch gekennzeichnet, daß das Bauteil als tubusförmiger Hohlkörper (3) ausgebildet ist, der in einem Durchbruch des Deckels (2) angeordnet ist.

7. Unterflurgerätedose nach Anspruch 6, dadurch gekennzeichnet, daß eine erste umlaufende Dichtung (24) zwischen Hohlkörper (3) und Durchbruch des Deckels (2) für die versenkte Ruheposition des Hohlkörpers (3) und eine zweite umlaufende Dichtung (23) für die Betriebsposition des Hohlkörpers (3) vorgesehen sind.

8. Unterflurgerätedose nach Anspruch 7, dadurch gekennzeichnet, daß die Außenwandung des Hohlkörpers (3) mit wenigstens einer Kulissenführung (25, 26, 28) zum gesteuerten Bewegen des Hohlkörpers (3) im Durchbruch zwischen der Ruhe- und der Betriebsposition versehen ist, der im Bereich eines Randes des Durchbruchs wenigstens ein Führungsnocken (27) zugeordnet ist.

9. Unterflurgerätedose nach Anspruch 8, dadurch gekennzeichnet, daß die wenigstens eine Kulissenführung einen in Umfangsrichtung verlaufenden ersten Konternutabschnitt (26), einen daran anschließenden, auf die Längsachse (34) des Hohlkörpers (3) bezogenen axialen Verschiebenutabschnitt (25) und einen daran anschließenden zweiten, zum ersten Konternutabschnitt (26) parallelen Konternutabschnitt (28) aufweist.

10. Unterflurgerätedose nach Anspruch 9, dadurch gekennzeichnet, daß der wenigstens eine Führungsnocken (27) in den beiden Konternutabschnitten (26, 28) arretierbar ist.

11. Unterflurgerätedose nach Anspruch 10, dadurch gekennzeichnet, daß der Hohlkörper (3) im Bereich der beiden Konternutabschnitte (26, 28) bajonettverschlußartig arretierbar ist.

12. Unterflurgerätedose nach einem der vorhergehenden Ansprüche, dadurch gekennzeichnet, daß ein Teil (20) des Hohlkörpers (3) als Schwenkdeckel ausgebildet ist, der mittels einer Rastverbindung am anderen Teil (21) des Hohlkörpers (3) arretierbar ist.

13. Unterflurgerätedose nach Anspruch 12, dadurch gekennzeichnet, daß der Schwenkdeckel (20, 20a) mit einer Schnurauslaßöffnung versehen ist.

14. Unterflurgerätedose nach Anspruch 13, dadurch gekennzeichnet, daß im Bereich der Schnurauslaßöffnung eine schutzkante (32) vorgesehen ist.

15. Unterflurgerätedose nach Anspruch 13 oder 14, dadurch gekennzeichnet, daß die Schnurauslaßöffnung mittels einer Staubschutzdichtung (29) abdichtbar ist.

16. Unterflurgerätedose nach Anspruch 1, dadurch gekennzeichnet, daß zwischen Deckel (2) und Schutzrahmen (1) mehrere Auflagenoppen (6) aus einem Kunststoffmaterial vorgesehen sind.

17. Unterflurgerätedose nach Anspruch 13, dadurch gekennzeichnet, daß die Schurauslaßöffnung (53) in einer zur Oberfläche des Deckels (2) parallelen Ebene vorgesehen ist.

18. Unterflurgerätedose nach Anspruch 17, dadurch gekennzeichnet, daß die Schnurauslaßöffnung in der Trennebene zwischen Oberteil (20a) und Unterteil (21a) vorgesehen ist.

19. Unterflurgerätedose nach Anspruch 18, dadurch gekennzeichnet, daß das Unterteil im Bereich des Schnurauslasses mit einem kegelstumpfförmig nach innen gezogenen Wandungsabschnitt (51) versehen ist.

20. Unterflurgerätedose nach Anspruch 19, dadurch gekennzeichnet, daß das Oberteil im Bereich des Schnurauslasses einen zylindrischen Kragen (52) aufweist, der gegenüber der Wandung (51) des Unterteils radial nach außen versetzt ist.

## Claims

1. An underfloor equipment container for floors requiring wet cleaning, with a component (3) constructed as a cord outlet which is provided centrally in a cover (2) of a protective frame (1) and which, in the operative position, is tightly integrated into the cover to project from the top thereof, whereby there is an encircling gasket (5) between the cover and the protective frame, characterised in that the cover (2) is pivotally disposed on the protective frame (1) and comprises an interlocking arrangement (13 to 19; 38 to 41; 42 to 50) which maintains the cover (2) pressed against the encircling gasket (5) when in the locked position.

2. An underfloor equipment container according to claim 1, characterised in that the interlocking arrangement comprises, associated with the cover (2), an actuating element (14; 38, 42) for releasing a self-resetting locking mechanism.

3. An underfloor equipment container according to claim 2, characterised in that the interlocking means comprises, movably mounted on the cover (2), a catch handle (14) adapted to be locked together with a mating member (18) on the protective frame.

4. An underfloor equipment container according to claim 3, characterised in that the catch handle (14) comprises a restoring spring (16).

5. An underfloor equipment container according to one of the preceding claims, characterised in that the container (3) which is constructed as a cord outlet within the cover (2) is adapted for movement between a recessed inoperative position in which it is flush with the top of the cover and the operative position and in that sealing elements (23, 24) are provided between the cover (2) and the component (3) both for the inoperative and also for the operative positions, and in that means (26, 27, 28) are provided to secure the component (3) in the inoperative and operative positions respectively.

6. An underfloor equipment container according to claim 5, characterised in that the component is constructed as a tubular hollow body (3) disposed in an aperture in the cover (2).

7. An underfloor equipment container according to claim 6, characterised in that a first encircling gasket (24) is provided between the hollow body (3) and the aperture in the cover (2) for the depressed inoperative position of the hollow body (3) and a second encircling gasket (23) is provided for the operative position of the hollow body (3).

8. An underfloor equipment container according to claim 7, characterised in that the outer walls of the hollow body (3) are provided with at least one sliding block guide (25, 26, 28) for controlled movement of the hollow body (3) in the aperture between the inoperative and operative positions and with which at least one guide cam (27) is associated in the region of one edge of the said aperture.

9. An underfloor equipment container according to claim 8, characterised in that the at least one sliding block guide comprises a peripherally extending first locking groove portion (26), and then, related to the longitudinal axis (34) of the hollow body (3), an axial displacement groove portion (25) and adjacent thereto a second locking groove portion (28) parallel with the first locking groove portion (26).

10. An underfloor equipment container according to claim 9, characterised in that at least one guide cam (27) can be locked in the two locking groove portions (26, 28).

11. An underfloor equipment container according to claim 10, characterised in that the hollow body (3) can be secured by a bayonet-type locking arrangement in the region of the two locking groove portions (26, 28).

12. An underfloor equipment container according to one of the preceding claims, characterised in that the part (20) of the hollow body (3) is constructed as a pivotable cover which can be locked on the other part (21) of the hollow body (3) by means of a catch connection.

13. An underfloor equipment container according to claim 12, characterised in that the pivotable cover (20, 20a) is provided with a cord outlet orifice.

14. An underfloor equipment container according to claim 13, characterised in that a splash protective edge (32) is provided in the region of the cord outlet orifice.

15. An underfloor equipment container according to claim 13 or 14, characterised in that the cord outlet orifice can be sealed by means of a dustproof seal (29).

16. An underfloor equipment container according to claim 1, characterised in that a plurality of support studs (6) of a synthetic plastics material are provided between the cover (2) and the protective frame (1).

17. An underfloor equipment container according to claim 13, characterised in that the cord outlet orifice (53) is provided in a plane parallel with the surface of the cover (2).

18. An underfloor equipment container according to claim 17, characterised in that the cord outlet orifice is provided in the plane of separation between the upper part (20a) and the bottom part (21a).

19. An underfloor equipment container according to claim 18, characterised in that the bottom part is provided with a frustoconically inwardly drawn wall portion (51) in the region of the cord outlet.

20. An underfloor equipment container according to claim 19, characterised in that the upper part has in the region of the cord outlet a cylindrical collar (52) which is offset radially outwardly in respect of the wall (51) of the bottom part.

## Revendications

1. Boîtier pour appareillage installé sous plancher, pour sols qui doivent être nettoyés par voie humide, avec un composant (3), conçu comme une sortie de cordon, et qui est prévu en position centrale dans un couvercle (2) d'un cadre de protection (1), et qui, en position d'utilisation, est inséré dans le couvercle d'une manière étanche et en porte-à-faux à partir d'une face supérieure du couvercle, où on prévoit entre le couvercle et le cadre de protection une étanchéité périphérique (5), caractérisé en ce que le couvercle (2) est disposé en pivotement contre le cadre de protection (1), et comporte un dispositif de verrouillage (13 à 19 ; 38 à 41 ; 42 à 50), qui maintient le couvercle (2) en position verrouillée, comprimé contre l'étanchéité périphérique (5).

2. Boîtier pour appareillage installé sous plancher selon la revendication 1, caractérisé en ce que le dispositif de verrouillage comporte un élément de manoeuvre (14, 38, 42), affecté au couvercle (2), pour assurer le déverrouillage d'un mécanisme de verrouillage à rappel automatique.

3. Boîtier pour appareillage installé sous plancher selon la revendication 2, caractérisé en ce que le dispositif de verrouillage comporte une poignée d'encliquetage (14) logée contre le couvercle (2) de façon à pouvoir se déplacer, poignée qui peut être verrouillée à l'aide d'une contre-pièce (18) solidaire du cadre de protection.

4. Boîtier pour appareillage installé sous plancher selon la revendication 3, caractérisé en ce que la poignée d'encliquetage (14) comprend un ressort de rappel (16).

5. Boîtier pour appareillage installé sous plancher selon l'une des revendications précédentes, caractérisé en ce que le composant (3) conçu comme une sortie de cordon est mobile à l'intérieur du couvercle (2), entre une position de repos, renfoncée, se terminant en alignement avec la face supérieure du couvercle, et la position de marche ; que des éléments d'étanchéité (23, 24) sont prévus entre le couvercle (2) et le composant (3), tant pour la position de repos que pour la position de marche ; et que des moyens (26, 27, 28) sont prévus pour assurer le composant (3) dans la position de repos et la position de marche.

6. Boîtier pour appareillage installé sous plancher selon la revendication 5, caractérisé en ce que le composant est conçu comme un corps creux tubulaire (3), qui est disposé dans une traversée aménagée dans le couvercle (2).

7. Boîtier pour appareillage installé sous plancher selon la revendication 6, caractérisé en ce qu'on prévoit une première étanchéité périphérique (24) entre le corps creux (3) et la traversée aménagée dans le couvercle (2) pour la position de repos renfoncée du corps creux (3) et une deuxième étanchéité périphérique (23) pour la position de marche du corps creux (3).

8. Boîtier pour appareillage installé sous plancher selon la revendication 7, caractérisé en ce que la paroi extérieure du corps creux (3) est pourvue d'au moins un guide de coulisse (25, 26, 28) pour piloter le déplacement du corps creux (3) dans la traversée entre la position de repos et la position de marche, guide auquel est affectée au moins une came de guidage (27) dans la zone d'un bord de la traversée.

9. Boîtier pour appareillage installé sous plancher selon la revendication 8, caractérisé en ce qu'au moins le guide de coulisse comporte une première section de contre-écrou (26), courant dans le sens périphérique, une section d'écrou de déplacement (25), qui suit la première section, et axiale par rapport à l'axe longitudinal (34) du corps creux (3), et une deuxième section de contre-écrou (28), qui suit cette dernière, et qui est parallèle à la première section de contre-écrou (26).

10. Boîtier pour appareillage installé sous plancher selon la revendication 9, caractérisé en ce qu'au moins une came de guidage (27) peut être bloquée dans les deux sections de contre-écrou (26, 28).

11. Boîtier pour appareillage installé sous plancher selon la revendication 10, caractérisé en ce que le corps creux (3) peut être bloqué par une fermeture de type à baïonnette dans la zone des deux sections de contre-écrous (26, 28).

12. Boîtier pour appareillage installé sous plancher selon l'une des revendications précédentes, caractérisé en ce qu'une partie (20) du corps creux (3) est configurée comme un couvercle pivotant, qui peut être bloqué, à l'aide d'un assemblage à encliquetage, à l'autre partie (21) du corps creux (3).

13. Boîtier pour appareillage installé sous plancher selon la revendication 12, caractérisé en ce que le couvercle pivotant (20, 20a) est pourvu d'une ouverture pour le passage du cordon.

14. Boîtier pour appareillage installé sous plancher selon la revendication 13, caractérisé en ce qu'on prévoit une arête de protection contre les éclaboussures (32) dans la zone de l'ouverture destinée à la sortie du cordon.

15. Boîtier pour appareillage installé sous plancher selon la revendication 13 ou 14, caractérisé en ce que l'ouverture destinée à la sortie du cordon peut être étanchée à l'aide d'une étanchéité (29) anti-poussière.

16. Boîtier pour appareillage installé sous plancher selon la revendication 1, caractérisé en ce qu'on prévoit entre le couvercle (2) et le cadre de protection (1) plusieurs plots d'appui (6) en un matériau plastique.

17. Boîtier pour appareillage installé sous plancher selon la revendication 13, caractérisé en ce que l'ouverture (53) destinée à la sortie du cordon est prévue dans un plan parallèle à la surface du couvercle (2).

18. Boîtier pour appareillage installé sous plancher selon la revendication 17, caractérisé en ce que l'ouverture destinée à la sortie du cordon est prévue dans le plan de séparation entre la partie supérieure (20a) et la partie inférieure (21a).

19. Boîtier pour appareillage installé sous plancher selon la revendication 18, caractérisé en ce que la partie inférieure est, dans la zone de la sortie du cordon, pourvue d'une section de paroi (51) s'étendant vers l'intérieur en forme de tronc de cône.

20. Boîtier pour appareillage installé sous plancher selon la revendication 19, caractérisé en ce que la partie supérieure comporte dans la zone de la sortie du cordon une collerette cylindrique (52), qui est radialement décalée vers l'extérieur par rapport à la paroi (51) de la partie inférieure.
